# EUROPÄISCHE PATENTSCHRIFT

(11) **EP 1 715 196 B1**
(45) Veröffentlichungstag und Bekanntmachung des Hinweises auf die Patenterteilung: **30.11.2011**
(21) Anmeldenummer: 05008845.9
(22) Anmeldetag: 22.04.2005
(51) Int. Cl.: F15D 1/06

(54) **Kunststoffplatte zum Auskleiden von Betonbauteilen**
Synthetic panels to cover concrete constructions parts
Panneaux synthétiques pour la couverture de constructions en béton

(43) Veröffentlichungstag der Anmeldung: 25.10.2006
(73) Patentinhaber: AGRU KUNSTSTOFFTECHNIK GMBH, 4540 Bad Hall (AT)
(72) Erfinder: Berger, Wolfgang, 99425 Weimar (DE)
(74) Vertreter: Luderschmidt, Schüler & Partner

(56) Entgegenhaltungen:
- EP-A- 1 194 712
- WO-A-01/57340
- US-A- 4 004 615
- US-A- 4 280 870
- US-A- 4 506 865
- US-A- 4 986 496
- US-A- 5 070 937

## Beschreibung

Die Erfindung bezieht sich auf eine Kunststoffplatte zum Auskleiden von Betonbauteilen, insbesondere Betonrohren, die von einem fließfähigen Medium durchströmt werden. Darüber hinaus betrifft die Erfindung eine Anordnung aus Kunststoffplaten zum Auskleiden von Betonbauteilen.

Zur Auskleidung von Betonbehältern, die flüssige oder gasförmige Chemikalien enthalten, sind Kunststoffplatten bekannt, die den Beton vor den Chemikalien schützen. Derartige Kunststoffplatten werden vielfach mit dem Betonbauteil verklebt. Da die glatte Oberfläche der Kunststoffplatten aber keine feste mechanische Verbindung mit dem Beton eingeht, besteht die Gefahr, dass sich die Kunststoffplatten im Laufe der Zeit lösen.

Aus der WO 01/57340 A1 sind Kunststoffplatten bekannt, die auf der dem Betonbauteil zugewandten Seite eine Vielzahl von Verankernagselementen aufweisen, die beim Betonieren eine formschlüssige Verbindung mit dem Beton eingehen. Die Verankerungselemente sind als sich verspreizende Flügelelemente ausgebildet, die in ihrem Fußbereich Stützstege aufweisen.

Die aus der WO 01/57340 A1 bekannten Kunststoffplatten mit Verankerungselementen haben sich in der Praxis zur Auskleidung von Betonbehältern bewährt, die vor Chemikalien zu schützen sind. Mit den bekannten Kunststoffplatten könnten grundsätzlich auch Rohrleitungen ausgekleidet werden, die ein fließfähiges Medium, d.h. ein flüssiges oder gasförmiges Medium führen.

Um dem Medium einen möglichst geringen Widerstand entgegenzusetzen, wird grundsätzlich angestrebt, die Oberfläche der Auskleidung möglichst glatt auszubilden. Nachteilig ist jedoch, dass sich insbesondere im Bereich von Rohrkrümmungen oder -abzweigungen sowie Reduzierungen oder Erweiterungen des Rohrquerschnitts an der Rohrinnenwand im Laufe der Zeit Festkörper ablagern können, die in dem Medium enthalten sind. Insbesondere bei Mischkanalisationen, die extremen Schwankungen des Abflussvolumens ausgesetzt sind, zählen die Ablagerungen zu den typischen Schadensbildern.

Aus der EP 1 194 712 B1 ist eine Rohrleitung bekannt, deren Wandung eine strukturierte Oberfläche aufweist, die aus einer Vielzahl von quaderförmigen oder pyramidenförmigen Erhebungen besteht. Es hat sich gezeigt, dass sich bei der strukturierten Oberfläche eine Grenzschicht an der Rohrwandung ausbildet, die bewirkt, dass die Fähigkeit, in dem Medium mitgeführte Partikel mitzureißen, erhöht wird. Entsprechend wird die Neigung, dass Partikel an der Wandung haften, stark reduziert. Dieser Effekt wird allgemein als Erhöhung der Schleppwirkung der im Medium mitgeführten Partikel bezeichnet.

Die EP 1 194 712 B1 schlägt vor, entweder die Wandung des Rohrs mit der strukturierten Oberfläche zu versehen oder in das Rohr einen rohrförmigen strukturierten Folien- oder Platteneinsatz einzuziehen, der mit dem Rohr verklebt wird.

Der Erfindung liegt die Aufgabe zugrunde, von einem fließfähigen Medium durchströmte Betonbauteile unterschiedlicher Ausbildung auf einfache Weise derart auszukleiden, dass die Betonbauteile vor aggressiven Medien geschützt sind, ohne dass die Gefahr der Ablagerung von in den Medien enthaltenen Partikeln an der Wandung der Betonbauteile besteht.

Die Lösung dieser Aufgabe erfolgt erfindungsgemäß mit den Merkmalen des Patentanspruchs 1 bzw. 20.

Zur Auskleidung der Betonbauteile findet erfindungsgemäß nicht ein rohrförmiger Folien- oder Platteneinsatz Verwendung, sondern Kunststoffplatten, die zu einem das Bauteil auskleidenden Körper miteinander verbunden werden. Da die Kunststoffplatten eine ausreichende Flexibilität haben, besteht die Möglichkeit, nicht nur rechteckförmige, sondern auch rohrförmige Betonbauteile auszukleiden, Nach dem Einlegen der Kunststoffplatten in das Betonbauteil werden die Platten vorzugsweise miteinander verschweißt.

Die erfindungsgemäße Kunststoffplatte weist an der dem Medium zugewandten Seite eine Vielzahl von nebeneinander angeordneten Strömungselementen auf, die als erhabene Strukturen mit einer in Flussrichtung weisenden stromaufwärtigen Flanke und einer entgegen der Flussrichtung weisenden stromabwärtigen Flanke ausgebildet sind, wobei die zwischen den Strömungselementen liegenden Oberflächenbereiche glatt sind. Dadurch wird die Schleppwirkung der im Medium mitgeführten Partikel selbst bei niedrigen Strömungsgeschwindigkeiten und diskontinuierlichem Betrieb erhöht, An der dem Medium abgewandten Seite weist die Kunststoffplatte eine Vielzahl von Verankerungselementen auf, so dass die Kunststoffplatte mit dem Betonbauteil formschlüssig verbindbar ist.

In zahlreichen Versuchen hat sich gezeigt, dass die Schleppwirkung der im Medium mitgeführten Partikel erhöht werden kann, wenn die erhabenen Strukturen dem fließfähigen Medium einen gewissen Widerstand entgegensetzen. Dies wird dadurch erreicht, dass die erhabenen Strukturen mit einer in Flussrichtung weisenden stromaufwärtigen Flanke und der entgegen der Flussrichtung weisenden stromabwärtigen Flanke ausgebildet sind. Dieser Effekt tritt insbesondere dann auf, wenn die in Flussrichtung weisenden Flanken der Strömungselemente steiler als die entgegen der Strömungsrichtung weisenden Flanken sind. Damit weisen die Strömungslemente einen keilförmigen Querschnitt auf Es hat sich als vorteilhaft erwiesen, wenn die in Flussrichtung weisenden stromaufwärtigen Flanken der Stromungselemente mit den glatten Oberflächenbereichen der Kunststoffplatte einen Winkel von 70 bis 90°, vorzugsweise 80 bis 90°, insbesondere ca. 90° einschließen. Die entgegen der Flussrichtung weisenden stromabwärtigen Flanken der Strömungselemente schließen mit den glatten Oberflächenbereichen der Kunststoffplatte vorzugsweise einen Winkel von 30 bis 60°, weiterhin vorzugsweise 40 bis 50°, insbesondere ca. 45° ein.

In den Versuchen hat sich gezeigt, dass sich eine besonders hohe Schleppwirkung erzielen lässt, wenn die Längsachsen der als langgestreckte Erhebungen ausgebildeten Strömungselemente mit der Längsrichtung der Kunststoffplatten, die in Flussrichtung des fließfähigen Medium verläuft, einen Winkel von 30 bis 60°, weiterhin vorzugsweise 40 bis 50°, insbesondere ca. 45° einschließen. Vorzugsweise sind die langgestreckten Erhebungen in einzelnen Reihen jeweils auf einer gemeinsamen Achse angeordnet, wobei die Kunststoffplatte vorzugsweise in zwei Hälften aufgeteilt ist, auf denen die Strömungselemente spiegelbildlich angeordnet sind. Damit wird eine rippenartige Oberflächenstruktur mit schmalen Stegen geschaffen, wobei die Achsen, auf denen die langgestreckten Erhebungen liegen, schräg zur Flussrichtung verlaufen.

Bei einer bevorzugten Ausführungsform ist die Kunststoffplatte in zwei Hälften aufgeteilt, wobei die Strömungselemente auf den beiden Hälften spiegelbildlich angeordnet sind. Vorzugsweise sind die Strömungselemente in einzelnen Reihen jeweils auf einer gemeinsamen Achse nebeneinanderliegend angeordnet. Dabei hat sich als vorteilhaft erwiesen, dass der Abstand zwischen den Strömungselementen auf einer Reihe kleiner als die Länge der Strömungselemente ist.

Bei der erfinderungsmäßen Ausführungsform sind die Strömungselemente als langgestreckte Erhebungen ausgebildet. Unter langgestreckten Erhebungen sind alle Erhebungen zu verstehen, die in Längsrichtung eine Ausdehnung haben, die ein Vielfaches der Ausdehnung in Querrichtung ist. Vorzugsweise laufen die als langgestreckte Erhebungen ausgebildeten Strömungselemente zu den Enden spitz aus. Es ist aber auch möglich, dass die Strömungselemente an den Enden abgerundet sind.

Weitere bevorzugte Ausgestaltungen der Strömungselemente und der Verankerungselemente sind Gegenstand der Unteransprüche.

Im folgenden wird ein Ausführungsbeispiel der Erfindung unter Bezugnahme auf die Zeichnungen im einzelnen erläutert.

Es zeigen:
- Fig. 1: einen Ausschnitt einer erfindungsgemäßen Kunststoffplatte in der Draufsicht,

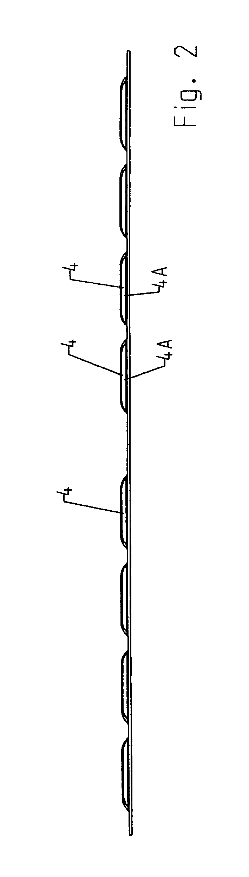

- Fig. 2: einen Schnitt durch die Kunststoffplatte von Fig. 1 entlang der Linie A-A in vergrößerter Darsstellung,
- Fig. 3: einen Schnitt durch die Kunststoffplatte von Fig. 1 entlang der Linie B-B in vergrößerter Darstellung,

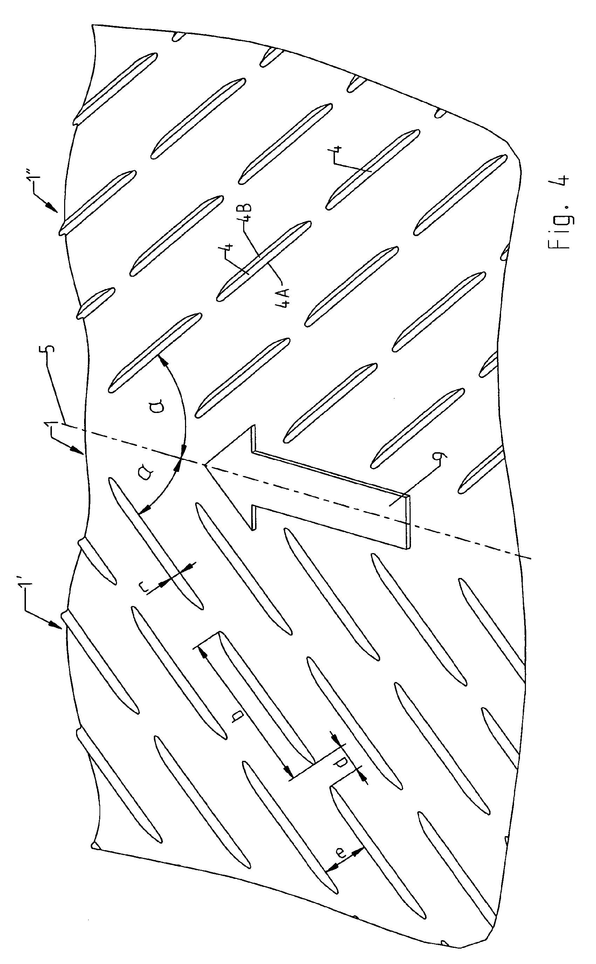

- Fig. 4: einen vergrößerten Ausschnitt der Kunststoffplatte von Fig. 1 in der Draufsicht,
- Fig. 5: eine Seitenansicht von nebeneinanderliegenden Verankerungselementen der Kunststoffplatte von Fig, 1 in vergrößerter Darstellung und
- Fig. 6: einen vergrößerten Ausschnitt der Kunststoffplatte von Fig. 1 in der Unteransicht.

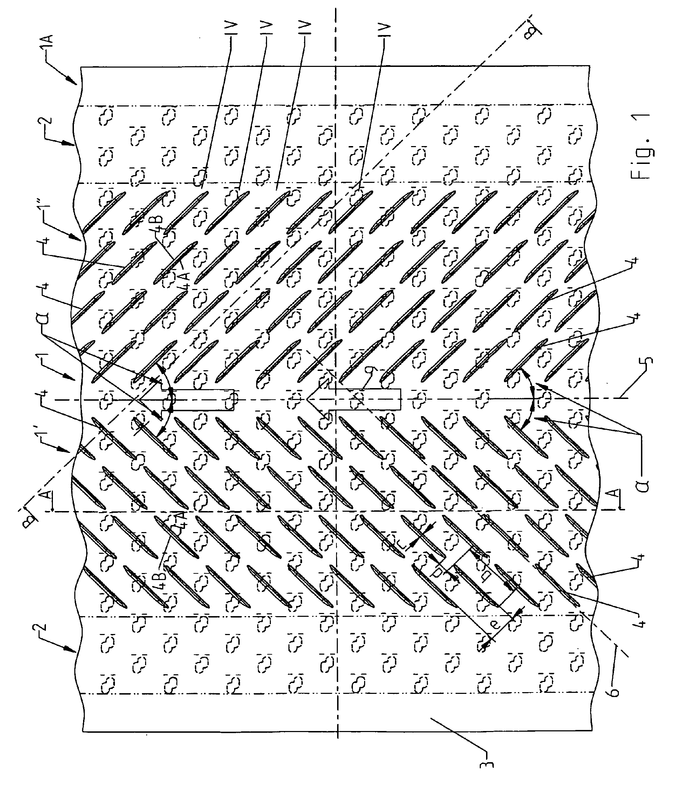

Fig. 1 zeigt einen Ausschnitt einer erfindungsgemäBen Kunststoffplatte in der Draufsicht. Die Kunststoffplatte besteht aus einem thermoplastischen Werkstoff, insbesondere PVC, PE, PP, PVDF und ECTFE. Die Stärke der Kunststoffplatte beträgt 1 bis 5 mm, vorzugsweise 2 bis 4 nun, so dass sie einerseits eine ausreichende Festigkeit, andererseits aber auch eine ausreichende Flexibilität zum Biegen aufweist. Bei dem Ausführungsbeispiel ist die Platte 2 mm stark. Sie kann als Bahnenware in unterschiedlichen Längen bereitgestellt werden.

Die Kunststoffplatte weist an der dem Medium zugewandten Seite 1A einen Bereich 1 mit einer strukturierten Oberfläche auf, an den sich zu beiden Seiten nicht strukturierte glatte Bereiche 2 anschließen, die in an Ober- und Unterseite glatte Schweißränder 3 übergehen. Die Ränder 3 der Die Oberflächenstruktur, die den wesentlichen Teil der Gesamtoberfläche der Kunststoffplatte einnimmt, wird aus einer Vielzahl von Strömungselementen 4 gebildet, die in einzelnen Reihen IV jeweils nebeneinander angeordnet sind.

Die Strömungselemente 4 sind als langgestreckte Erhebungen ausgebildet, die zu den Enden spitz auslaufen. Sie bilden schmale Stege, die mit der Kunststoffplatte einstückig sind, Die schmalen Stege haben eine Höhe von 2 bis 8 mm, vorzugsweise 3 bis 7 mm, weiterhin vorzugsweise 4 bis 6 mm. Bei dem Ausführungsbeispiel haben die schmalen Stege eine Höhe a von 5 ca. mm. Die Stege haben eine Länge b von 20 bis 140 mm, weiterhin vorzugsweise 40 bis 120 mm, weiterhin vorzugsweise 60 bis 100. Bei dem Ausführungsbeispiel haben die schmale Stege eine Länge von 85 mm. Sie haben vorzugsweise eine Breite c von 1 bis 40 mm. Bei dem Ausführungsbeispiel ist die Breite der Stege ca, 5 mm.

Der Bereich 1 mit der strukturierten Oberfläche unterteilt sich in eine linke Hälfte 1' und eine rechte Hälfte 1". Die schmalen Stege 4 sind in der linken und rechten Hälfte bezüglich der Längsachse 5 der Kunststoffplatte spiegelbildlich ausgerichtet. Die Längsachsen 6 aller Stege schließen mit der Längsachse 5 der Kunststoffplatte, die der Flussrichtung des Medium entspricht, einen Winkel α von 30 bis 60°, vorzugsweise 50 bis 45 ° ein. Bei dem Ausführungsbeispiel ist der Winkel ca. 45°.

Die Längsachsen der jeweils in einer Reihe IV angeordneten Stege 4 liegen auf einer gemeinsamen Achse. Dabei ist der Abstand d der auf der gemeinsamen Achse 6 liegenden Stege 4 kleiner als die Länge b der Stege. Auch ist der Abstand e zwischen den einzelnen Reihen IV der Stege kleiner als die Länge b der Stege, aber größer als der Abstand d zwischen den Stegen.

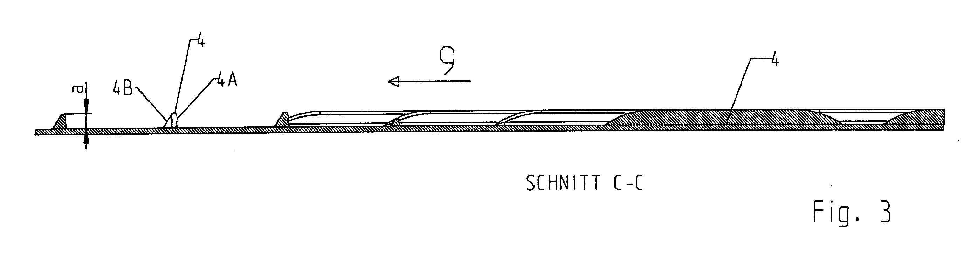

Die in der linken und rechten Hälfte 1', 1" der Kunststoffplatte angeordneten Stege 4 sind derart ausgerichtet, dass sie in Flussrichtung 9 zeigen. Die Stege haben jeweils eine in Flussrichtung 9 weisende stromaufwärtige Flanke 4A und eine entgegen der Flussrichtung weisende stromababwärtige Flanke 4B. Entscheidend ist, dass die in Flussrichtung weisende Flanke 4A steiler als die entgegen der Flussrichtung weisende Flanke ist. Insofern haben die Stege einen keilförmigen Querschnitt. Bei dem Ausführungsbeispiel schließen die in Flussrichtung weisenden Flanken 4A der Stege mit der Oberfläche der Kunststoffplatte einen Winkel von ca. 90° ein. Die entgegen der Flussrichtung weisenden Flanken 4B der Stege 4 schließen mit der Oberfläche der Kunststoffplatte 1 bei dem Ausführungsbeispiel einen Winkel von ca. 45°ein. Die in Strömungsrichtung weisenden Flanken 4A laufen am Fußpunkt in einem kleinen Radius aus, während die entgegen der Strömungsrichtung weisenden Flanken 4B in einer scharfen Kante enden (Fig. 3).

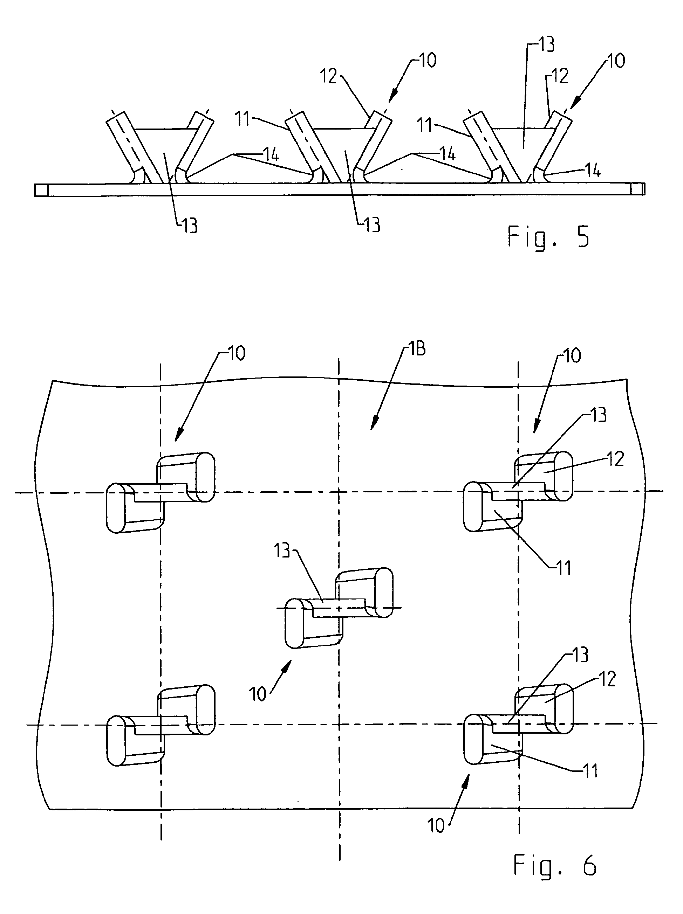

Nachfolgend wird unter Bezugnahme auf die Fig. 5 und 6 die dem Betonbauteil zugewandte Rückseite 1B der Kunststoffplatte beschrieben. An der Rückseite weist die Kunststoffplatte 1 mit Ausnahme im Bereich der Schweißränder 3 vorspringende Verankerungselemente 10 auf, die mit der Kunststoffplatte einstückig sind. Die nur an der Rückseite der Platte befindlichen Verankerungselemente sind in Fig. 1 andeutungsweise dargestellt Die Verankerungselemente 10 sind jeweils als zwei sich verspreizende Flügelelemente 11, 12 ausgebildet, die über einen Stützsteg 13 miteinander verbunden sind. Die Flügelelemente 11, 12 gehen am Fußpunkt in einem Bogen 14 in die Kunststoffplatte stetig über. Hierdurch ergibt sich ein vergleichsweise breite Verbindungsfläche der Flügelelemente mit der Kunststoffplatte. Die Höhe der Stützstege 13 beträgt mindestens 70%, vorzugsweise mindestens 80% der Höhe der Flügelelemente. Die jeweils ein Verankerungselement 10 bildenden Flügelelemente sind versetzt zueinander angeordnet.

Die Ausbildung der Verankerungselemente 10 an der Rückseite der Kunststoffplatte 1 ist im einzelnen in der WO 01/57340 A1 beschrieben, auf die zum Zwecke der Offenbarung ausdrücklich Bezug genommen wird.

Die Kunststoffplatte ist eine koextrudierte Platte, die eine Sandwichstruktur mit einer die Strömungselemente (4) umfassenden ersten Schicht und einer die Verankerungselemente (9) umfassenden zweiten Schicht aufweist. Die erste und zweite Schicht bestehen aus Materialien und mit unteshiedlichen mechanischen und/oder chemischen und/oder optischen Eigenschaften. Die erste Schicht mit den Strömungselementen 9 besteht aus einem eingefärbten Kunststoffmaterial, während die zweite Schicht mit den Verankerungselementen aus einem nicht eingefärbten Kunststoffmaterial besteht Daher ist es möglich, die Abnutzung der mit dem Medium in Kontakt tretenden ersten Schicht auf einfache Weise optisch zu überwachen. So kann anhand der Farbe erkannt werden, ob die erste Schicht abgetragen ist. Diese Überwachung kann mit einer Kamera erfolgen. Weiterhin ist das Kunststoffmaterial der ersten Schicht abrasionsfester als das Material der zweiten Schicht

Zum Auskleiden von Betonbauteilen, insbesondere Betonrohren, werden die einzelnen Kunststoffplatten in die Schalung des Betonrohrs eingelegt und an ihren Schweißrändem 3 zu einer rohrförmigen Auskleidung miteinander verschweißt-Beim Betonieren werden die Kunststoffplatten mittels der Verankerungselemente 10 formschlüssig mit dem Betonbauteil verbunden. Durch diese Verankerung wird eine erhöhte Langzeitfestigkeit erreicht. Die Strömungselemente 4 an der Innenseite der rohrförmigen Auskleidung erhöhen die Schleppwirkung der in dem Medium mitgeführten Partikel und verhindern somit die Bildung von Ablagerungen an der Rohrinnenseite.

Der entscheidende Vorteil der erfindungsgemäßen Kunststoffplatte liegt darin, dass auf einfache Weise Betonbauteile kostengünstig ausgekleidet werden können, wobei eine hohe Langzeitfestigkeit und Schleppwirkung erzielt wird. Es sei bemerkt, dass die Erhöhung der Schleppwirkung mit der bevorzugten Ausbildung der Strömungselemente von eigener erfinderischer Bedeutung ist. Denn es wäre grundsätzlich auch möglich, die Kunststoffplatte auf eine andere Weise als mit den Verankerungselementen an dem Betonbauteil zu befestigen. Dann wäre zwar die erhöhte Langzeitfestigkeit nicht gegeben, aber die Vorteile der erhöhten Schleppwirkung kämen zum Tragen.

## Patentansprüche

1. Kunststoffplatte zum Auskleiden von Betonbauteilen, die von einem fließfähigen Medium durchströmt werden, wobei die der Wandung des Betonbauteils zugewandte Seite (1A) der Kunststoffplatte eine Vielzahl von Verankerungselementen (10) aufweist, so dass die Kunststoffplatte mit dem Betonbauteil formschlüssig verbindbar ist, wobei
die dem Medium zugewandte Seite (1 B) der Kunststoffplatte eine Vielzahl von nebeneinander angeordneten Strömungselementen (4) aufweist, die als erhabene Strukturen mit einer in Flussrichtung (9) weisenden stromaufwärtigen Flanke (4A) und einer entgegen der Flussrichtung weisenden stromabwärtigen Flanke (4B) ausgebildet sind, wobei die zwischen den Strömungselementen liegenden Oberflächenbereiche der Kunststoffplatte glatt sind, so dass sich die Schleppwirkung der im Medium mitgeführten Partikel erhöht, **dadurch gekennzeichnet, dass** die Strömungselemente (4) als langgestreckte Erhebungen ausgebildet sind und die Längsachsen (6) der als langgestreckte Erhebungen ausgebildeten Strömungselemente (4) mit der Längsachse (5) der Kunststoffplatte einen Winkel von 30 bis 60° einschließen.

2. Kunststoffplatte nach Anspruch 1,
**dadurch gekennzeichnet, dass** die in Flussrichtung (9) weisenden stromaufwärtigen Flanken (4A) der Strömungselemente (4) steiler als die entgegen der Strömungsrichtung weisenden stromabwärtigen Flanken (4B) sind.

3. Kunststoffplatte nach Anspruch 1 oder 2,
**dadurch gekennzeichnet, dass** die in Flussrichtung (9) weisenden stromaufwärtigen Flanken (4A) der Strömungselemente (4) mit den glatten Oberflächenbereichen der Kunststoffplatte einen Winkel von 70 bis 90°, vorzugsweise 80 bis 90°, insbesondere ca. 90° einschließen.

4. Kunststoffplatte nach einem der Ansprüche 1 bis 3,
**dadurch gekennzeichnet, dass** die entgegen der Flussrichtung (9) weisenden stromabwärtigen Flanken (4B) der Strömungselemente (4) mit den glatten Oberflächenbereichen der Kunststoffplatte einen Winkel von 30 bis 60°, vorzugsweise 40 bis 50°, insbesondere ca. 45° einschließen.

5. Kunststoffplatte nach einem der Ansprüche 1 bis 4,
**dadurch gekennzeichnet, dass** die Kunststoffplatte in zwei Hälften (1, 1') aufgeteilt ist, wobei die Strömungselemente(4) auf den beiden Hälften spiegelbildlich angeordnet sind.

6. Kunststoffplatte nach einem der Ansprüche 1 bis 5,
**dadurch gekennzeichnet, dass** die Strömungselemente (4) in einzelnen Reihen (IV) jeweils auf einer gemeinsamen Achse (6) nebeneinanderliegend angeordnet sind.

7. Kunststoffplatte nach einem der Ansprüche 1 bis 6,
**dadurch gekennzeichnet, dass** der Abstand (d) zwischen den Strömungselementen (4) auf einer Reihe (IV) kleiner als die Länge (b) der Strömungselemente ist.

8. Kunststoffplatte nach einem der Ansprüche 1 bis 7,
**dadurch gekennzeichnet, dass** die gemeinsamen Achsen (6), auf denen die Strömungselemente (4) angeordnet sind, mit der Längsachse (5) der Kunststoffplatte einen Winkel von 30 bis 60°, vorzugsweise 40 bis 50°, insbesondere ca. 45° einschließen.

9. Kunststoffplatte nach einem der Ansprüche 1 bis 8,
**dadurch gekennzeichnet, dass** die als langgestreckte Erhebungen ausgebildeten Strömungselemente (4) zu den Enden spitz auslaufen.

10. Kunststoffplatte nach einem der Ansprüche 1 bis 9,
**dadurch gekennzeichnet, dass** die als langgestreckte Erhebungen ausgebildeten Strömungselemente (4) eine Höhe (a) von 2 bis 8 mm, vorzugsweise 3 bis 7 mm, weiterhin vorzugsweise 4 bis 6 mm, insbesondere ca. 5 mm haben.

11. Kunststoffplatte nach einem der Ansprüche 1 bis 10,
**dadurch gekennzeichnet, dass** die als langgestreckte Erhebungen ausgebildeten Strömungselemente (4) eine Länge (b) von 20 bis 140 mm, vorzugsweise 40 bis 120 mm, weiterhin vorzugsweise 60 bis 100 mm, insbesondere ca. 80 mm haben.

12. Kunststoffplatte nach einem der Ansprüche 1 bis 11,
**dadurch gekennzeichnet, dass** die als langgestreckte Erhebungen ausgebildeten Strömungselemente (4) eine Breite von 1 bis 40 mm, vorzugsweise 1 bis 10 mm, insbesondere ca. 5 mm haben.

13. Kunststoffplatte nach einem der Ansprüche 1 bis 12,
**dadurch gekennzeichnet, dass** die Verankerungselemente (10) als sich verspreizende Flügelelemente (11, 12) ausgebildet sind, die in ihrem Fußbereich Stützstege (13) aufweisen.

14. Kunststoffplatte nach Anspruch 13
**dadurch gekennzeichnet, dass** die Höhe der Stützstege (13) mindestens 70%, vorzugsweise mindestens 80% der Höhe der Flügelelemente (11, 12) beträgt.

15. Kunststoffplatte nach Anspruch 13 oder 14,
**dadurch gekennzeichnet, dass** die Flügelelemente (11, 12) in ihrem Fußbereich bogenförmige Übergänge (14) aufweisen.

16. Kunststoffplatte nach einem der Ansprüche 13 bis 15,
**dadurch gekennzeichnet, dass** jeweils zwei Flügelelemente (11, 12) versetzt zueinander angeordnet und über mindestens einen Stützsteg (13) miteinander verbunden sind.

17. Kunststoffplatte nach einem der Ansprüche 1 bis 16,
**dadurch gekennzeichnet, dass** die Kunststoffplatte Schweißränder (3) aufweist, an denen die dem Medium zu- und abgewandten Seiten (1A, 1B) der Kunststoffplatte glatt sind.

18. Kunststoffplatte nach einem der Ansprüche 1 bis 17, **dadurch gekennzeichnet, dass** die Kunststoffplatte eine Sandwichstruktur mit einer die Strömungselemente (4) umfassenden ersten Schicht und einer die Verankerungselemente (9) umfassenden zweiten Schicht aufweist.

19. Kunststoffplatte nach Anspruch 18, **dadurch gekennzeichnet, dass** die erste und zweite Schicht aus Materialien mit unterschiedlichen mechanischen und/oder chemischen und/oder optischen Eigenschaften bestehen.

20. Anordnung aus Kunststoffplatten nach einem der Ansprüche 1 bis 19,
wobei die Kunststoffplatten zu einem das Bauteil auskleidenden Körper miteinander verbunden sind.

## Claims

1. Sheet of plastics material for lining concrete constructional components through which a flowable medium flows, the side (1A) of the sheet of plastics material which is adjacent the wall of the concrete constructional component having a plurality of anchoring members (10), thus enabling the sheet of plastics material to be connected to the concrete constructional component by positive interengagement, the side (1B) of the sheet of plastics material which is adjacent the medium having a plurality of members for flow (4) arranged next to one another which take the form of elevated structures having an upstream flank (4B) facing in the direction of flow (9) and a downstream flank (4B) facing in the opposite direction from the direction of flow, the regions of the surface of the sheet of plastics material which are situated between the members for flow being smooth, thus increasing the transporting action of the particles carried along in the medium, **characterised in that** the members for flow (4) take the form of elongated elevations and the longitudinal axes (6) of the members for flow (4) which take the form of elongated elevations make an angle of 30 to 60° with the longitudinal axis (5) of the sheet of plastics material.

2. Sheet of plastics material according to claim 1, **characterised in that** the upstream flanks (4A) of the members for flow (4), which face in the direction of flow (9), are steeper than the downstream flanks (4B) which face in the opposite direction from the direction of flow.

3. Sheet of plastics material according to claim 1 or 2, **characterised in that** the upstream flanks (4A) of the members for flow (4), which face in the direction of flow (9), make an angle of 70 to 90°, and preferably of 80 to 90°, and in particular of approximately 90°, with the smooth regions of the surface of the sheet of plastics material.

4. Sheet of plastics material according to one of claims 1 to 3, **characterised in that** the downstream flanks (4B) of the members for flow (4), which face in the opposite direction from the direction of flow (9), make an angle of 30 to 60°, and preferably of 40 to 50°, and in particular of approximately 45°, with the smooth regions of the surface of the sheet of plastics material.

5. Sheet of plastics material according to one of claims 1 to 4, **characterised in that** the sheet of plastics material is divided into two halves (1, 1'), the members for flow (4) being arranged as mirror images of one another on the two halves.

6. Sheet of plastics material according to one of claims 1 to 5, **characterised in that** the members for flow (4) are arranged in individual rows (IV) on respective common axes (6).

7. Sheet of plastics material according to one of claims 1 to 6, **characterised in that** the distance (d) between the members for flow in a row (IV) is less than the length (b) of the members for flow.

8. Sheet of plastics material according to one of claims 1 to 7, **characterised in that** the common axes (6) on which the members for flow (4) are arranged make an angle of 30 to 60°, and preferably of 40 to 50°, and in particular of approximately 45°, with the longitudinal axis (5) of the sheet of plastics material.

9. Sheet of plastics material according to one of claims 1 to 8, **characterised in that** the members for flow (4) which take the form of elongated elevations taper to a point at the ends.

10. Sheet of plastics material according to one of claims 1 to 9, **characterised in that** the members for flow (4) which take the form of elongated elevations are of a height (a) of 2 to 8 mm, and preferably of 3 to 7 mm, and as a further preference of 4 to 6 mm, and in particular of approximately 5 mm.

11. Sheet of plastics material according to one of claims 1 to 10, **characterised in that** the members for flow (4) which take the form of elongated elevations are of a length (b) of 20 to 140 mm, and preferably of 40 to 120 mm, and as a further preference of 60 to 100 mm, and in particular of approximately 80 mm.

12. Sheet of plastics material according to one of claims 1 to 11, **characterised in that** members for flow (4) which take the form of elongated elevations are of a width of 1 to 40 mm, and preferably of 1 to 10 mm, and in particular of approximately 5 mm.

13. Sheet of plastics material according to one of claims 1 to 12, **characterised in that** the anchoring members (10) take the form of splayed vane members which have supporting bridges (13) in the region of their feet.

14. Sheet of plastics material according to claim 13, **characterised in that** the height of the supporting bridges (13) is at least 70%, and preferably at least 80%, of the height of the vane members (11, 12).

15. Sheet of plastics material according to claim 13 or 14, **characterised in that** the vane members (11, 12) have arcuate transitions (14) in the region of their feet.

16. Sheet of plastics material according to one of claims 13 to 15, **characterised in that** two vane members (11, 12) at a time are arranged with an offset from one another and are connected together by at least one supporting bridge (13).

17. Sheet of plastics material according to one of claims 1 to 16, **characterised in that** the sheet of plastic material has edges (3) for welding at which the sides (1A, 1B) of the sheet of plastics material which are adjacent and remote from the medium are smooth.

18. Sheet of plastics material according to one of claims 1 to 17, **characterised in that** the sheet of plastics material has a sandwich structure having a first layer comprising the members for flow (4) and a second layer comprising the anchoring members (9).

19. Sheet of plastics material according to claim 18, **characterised in that** the first and second layers are composed of materials having different mechanical and/or chemical and/or optical properties.

20. Arrangement of sheets of plastics material according to one of claims 1 to 19, the sheets of plastics material being connected together into a body which lines the constructional component.

## Revendications

1. Plaque en matière plastique destinée à garnir des éléments de construction en béton qui sont traversés par un milieu fluide, sachant que la face (1A) de la plaque en matière plastique qui est tournée vers la paroi de l'élément de construction en béton présente une pluralité d'éléments d'ancrage (10), de sorte que la plaque en matière plastique peut être assemblée à l'élément de construction en béton par complémentarité de forme, sachant que la face (1B) de la plaque en matière plastique qui est tournée vers ledit milieu présente une pluralité d'éléments d'écoulement (4) disposés en juxtaposition, qui sont réalisés sous forme de structures en relief présentant un flanc amont (4A) dirigé dans le sens d'écoulement (9) et un flanc aval (4B) dirigé à l'encontre du sens d'écoulement, sachant que les régions de surface de la plaque en matière plastique situées entre les éléments d'écoulement sont lisses, de sorte que l'effet d'entraînement des particules entraînées dans ledit milieu augmente, **caractérisée en ce que** les éléments d'écoulement (4) sont réalisés sous forme de bossages oblongs, et les axes longitudinaux (6) des éléments d'écoulement (4) réalisés sous forme de bossages oblongs forment avec l'axe longitudinal (5) de la plaque en matière plastique un angle compris entre 30 et 60°.

2. Plaque en matière plastique selon la revendication 1, **caractérisée en ce que** les flancs amont (4A), dirigés dans le sens d'écoulement (9), des éléments d'écoulement (4) sont à pente plus raide que les flancs aval (4B), dirigés à l'encontre du sens d'écoulement.

3. Plaque en matière plastique selon la revendication 1 ou 2, **caractérisée en ce que** les flancs amont (4A), dirigés dans le sens d'écoulement (9), des éléments d'écoulement (4) forment avec les régions de surface lisses de la plaque en matière plastique un angle compris entre 70 et 90°, de préférence entre 80 et 90°, en particulier d'environ 90°.

4. Plaque en matière plastique selon l'une quelconque des revendications 1 à 3, **caractérisée en ce que** les flancs aval (4B), dirigés à l'encontre du sens d'écoulement (9), des éléments d'écoulement (4) forment avec les régions de surface lisses de la plaque en matière plastique un angle compris entre 30 et 60°, de préférence entre 40 et 50°, en particulier d'environ 45°.

5. Plaque en matière plastique selon l'une quelconque des revendications 1 à 4, **caractérisée en ce que** la plaque en matière plastique est divisée en deux moitiés (1, 1'), sachant que les éléments d'écoulement (4) sont disposés symétriquement sur les deux moitiés.

6. Plaque en matière plastique selon l'une quelconque des revendications 1 à 5, **caractérisée en ce que** les éléments d'écoulement (4) sont disposés en juxtaposition en rangées individuelles (IV), chaque fois sur un axe commun (6).

7. Plaque en matière plastique selon l'une quelconque des revendications 1 à 6, **caractérisée en ce que** la distance (d) entre les éléments d'écoulement (4) sur une rangée (IV) est inférieure à la longueur des éléments d'écoulement.

8. Plaque en matière plastique selon l'une quelconque des revendications 1 à 7, **caractérisée en ce que** les axes communs (6) sur lesquels sont disposés les éléments d'écoulement (4) forment avec l'axe longitudinal (5) de la plaque en matière plastique un angle compris entre 30 et 60°, de préférence entre 40 et 50°, en particulier d'environ 45°.

9. Plaque en matière plastique selon l'une quelconque des revendications 1 à 8, **caractérisée en ce que** les éléments d'écoulement (4) réalisés sous forme de bossages oblongs se terminent en pointe aux extrémités.

10. Plaque en matière plastique selon l'une quelconque des revendications 1 à 9, **caractérisée en ce que** les éléments d'écoulement (4) réalisés sous forme de bossages oblongs possèdent une hauteur (a) comprise entre 2 et 8 mm, de préférence entre 3 et 7 mm, d'une manière plus préférée entre 4 et 6 mm, en particulier d'environ 5 mm.

11. Plaque en matière plastique selon l'une quelconque des revendications 1 à 10, **caractérisée en ce que** les éléments d'écoulement (4) réalisés sous forme de bossages oblongs possèdent une longueur (b) comprise entre 20 et 140 mm, de préférence entre 40 et 120 mm, d'une manière plus préférée entre 60 et 100 mm, en particulier d'environ 80 mm.

12. Plaque en matière plastique selon l'une quelconque des revendications 1 à 11, **caractérisée en ce que** les éléments d'écoulement (4) réalisés sous forme de bossages oblongs possèdent une largeur comprise entre 1 et 40 mm, de préférence entre 1 et 10 mm, en particulier d'environ 5 mm.

13. Plaque en matière plastique selon l'une quelconque des revendications 1 à 12, **caractérisée en ce que** les éléments d'ancrage (10) sont réalisés sous forme d'ailettes écartées (11, 12) qui présentent des nervures d'appui (13) dans leur région de pied.

14. Plaque en matière plastique selon la revendication 13, **caractérisée en ce que** la hauteur des nervures d'appui (13) est d'au moins 70 %, de préférence au moins 80 % de la hauteur des ailettes (11, 12).

15. Plaque en matière plastique selon la revendication 13 ou 14, **caractérisée en ce que** les ailettes (11, 12) présentent des transitions cintrées (14) dans leur région de pied.

16. Plaque en matière plastique selon l'une quelconque des revendications 13 à 15, **caractérisée en ce que** deux ailettes (11, 12) sont chaque fois disposées en étant mutuellement décalées et sont reliées entre elles par au moins une nervure d'appui (13).

17. Plaque en matière plastique selon l'une quelconque des revendications 1 à 16, **caractérisée en ce que** la plaque en matière plastique présente des bords de soudage (3) sur lesquels les faces (1A, 1B) de la plaque en matière plastique, qui sont respectivement tournée vers ledit milieu et opposée audit milieu, sont lisses.

18. Plaque en matière plastique selon l'une quelconque des revendications 1 à 17, **caractérisée en ce que** la plaque en matière plastique présente une structure sandwich avec une première couche comprenant les éléments d'écoulement (4) et une deuxième couche comprenant les éléments d'ancrage (9).

19. Plaque en matière plastique selon la revendication 18, **caractérisée en ce que** la première et la deuxième couches sont constituées de matériaux ayant des propriétés mécaniques et/ou chimiques et/ou optiques différentes.

20. Ensemble de plaques en matière plastique selon l'une quelconque des revendications 1 à 19, sachant que les plaques en matière plastique sont assemblées entre elles pour former un corps garnissant l'élément de construction.
